# EUROPÄISCHE PATENTSCHRIFT

(11) **EP 0 737 277 B1**
(45) Veröffentlichungstag und Bekanntmachung des Hinweises auf die Patenterteilung: **18.06.1997**
(21) Anmeldenummer: 95906917.0
(22) Anmeldetag: 07.01.1995
(51) Int. Cl.: F16D 65/12, C22C 32/00

(54) **BREMSSCHEIBE FÜR SCHIENENFAHRZEUGE**
BRAKE DISK FOR RAIL VEHICLES
DISQUE DE FREIN POUR VEHICULES FERROVIAIRES

(30) Priorität: 14.01.1994 DE 4400898
(43) Veröffentlichungstag der Anmeldung: 16.10.1996
(73) Patentinhaber: Bergische Stahl-Industrie, D-42859 Remscheid (DE)
(72) Erfinder: DELLMANN, Torsten, D-50737 Köln (DE); LEHMANN, Wolfgang, D-42859 Remscheid (DE); ENGELS, Albrecht, D-42859 Remscheid (DE); RUPPERT, Helmut, D-42857 Remscheid (DE); ZEUNER, Hans, D-42857 Remscheid (DE)
(74) Vertreter: Dahlkamp, Heinrich-Leo
(86) Internationale Anmeldenummer: EP9500052
(87) Internationale Veröffentlichungsnummer: WO9519509

(56) Entgegenhaltungen:
- EP-A- 0 525 439
- GB-A- 2 268 511
- US-A- 5 183 632
- US-A- 5 199 481
- US-A- 5 224 572
- PATENT ABSTRACTS OF JAPAN vol. 18, no. 68 (C-1161) 4. Februar 1994 & JP,A,52 079 770 (FUKUDA TAKESHI) 26. Oktober 1993

## Beschreibung

Die Erfindung bezieht sich auf eine Bremsscheibe für Schienenfahrzeuge als Monoblockscheibe oder als aus Nabe, beziehungsweise Segmenten und Reibring zusammengesetzte Scheibe bestehend aus einer mit harten keramischen Partikeln verstärkten untereutektischen AlSi-Basislegierung.

Bremsscheiben, sowohl Wellen- als auch Radbremsscheiben für Schienenfahrzeuge bestehen üblicherweise aus Gußeisen mit Lamellengraphit oder Kugelgraphit oder aus Stahlguß.

Bei den heutigen Hochgeschwindigkeitszügen stellt die hohe Anzahl und das erhebliche Gewicht der Bremsscheiben ein Problem dar. Man ist daher bemüht, Bremsscheiben mit hoher Leistung und geringerem Gewicht zu verwenden, insbesondere da die Bremsscheiben ungefederte Massen sind.

In der EP 0 351 237 B1 ist ein Bremsscheibenmaterial für Eisenbahnfahrzeuge beschrieben, das in einer Aluminiumlegierungsmatrix verteilte, harte Keramikpartikel in einer Menge von bis 25 Gew% mit einem Partikeldurchmesser von 5 - 100 µ aufweist. Als härtende Partikel sind dabei u.a. Aluminiumoxyd, Al₂O₃ oder SiC vorgeschlagen worden.

Aus der JP-A-59173234 ist eine Bremsscheibe für Straßenfahrzeuge bekannt, die aus einer Al-hyper-eutectic-Si-Basislegierung mit Zusätzen aus SiC besteht. Diese Bremsscheiben sind für den Einsatz in relativ leichten Straßenfahrzeugen und für nur relativ geringe Geschwindigkeiten bestimmt.

Die JP-A-5279770 beschreibt schließlich eine gegossene Bremsscheibe bestehend aus einer 6 - 13 % Silicium enthaltenden AlSi-Basislegierung die 5 - 30 Gew% SiC mit Korngrößen von 30 - 50 µm enthält. Diese Legierung ist versuchsweise für eine Bremsscheibenform verwendet worden, die genau die Abmessungen der bisherigen aus Gußeisen hergestellten Radbremsscheiben hatte. Es hat sich aber gezeigt, daß die von den herkömmlichen Bremsscheiben aus Gußeisen mit Lamellengraphit oder Kugelgraphit an sich bekannten Abmessungen und Gewichtsverhältnisse für Bremsscheiben aus Aluminium zur Erreichung vergleichbarer Leistungswerte, insbesondere eines ausreichenden Wärmespeichervermögens bei Stoppbremsungen nicht übernommen werden können.

In der DE 42 12 558 A1 ist weiterhin ein Erzeugnis aus Leichtmetalllegierungsguß mit Verstärkungselementen aus Porenkeramikwerkstoff beschrieben, das auch für einen Bremssattel einer Scheibenbremse verwandt werden soll. Das Verstärkungselement aus Porenkeramik soll dabei aus Aluminiumsilikat, Tonerde, Zirkonerde oder Mullit bestehen.

Der Erfindung liegt die Aufgabe zugrunde, eine Bremsscheibe der eingangs angegebenen Art mit hoher Leistung, möglichst geringem Gewicht und optimaler Form vorzugchlagen.

Die Lösung dieser Aufgabe ist im Kennzeichen der Ansprüche 1 und 3 angegeben. Die Unteransprüche 2 und 4 bis 6 enthalten sinnvolle Ausführungsformen dazu.

Erfindungsgemäß wird vorgeschlagen, daß bei einer innenbelüfteten Bremsscheibe mit einer Gesamtbreite der Bremsscheibe von 60 - 200 mm, vorzugsweise 80 - 130 mm die Gurtdicke der Reibringe je 20 - 50 mm, vorzugsweise 30 - 40 mm beträgt. Im Hinblick auf eine ausreichende Kühlung der Räume zwischen den Reibringen sollte außerdem das Verhältnis von Lüftungskanalbreite zur Gurtdicke eines Reibringes 0,5 - 2, vorzugsweise 0,8 - 1,4 betragen.

Altemativ wird erfindungsgemäß für einen nicht belüfteten, massiv ausgebildeten Reibring vorgeschlagen, daß bei einem Durchmesser von 300 - 1000 mm das Verhältnis von Durchmesser zur Gurtdicke im Bereich von 8 - 12, vorzugsweise von 10 liegt. Durch die erfindungsgemäßen Vorschläge wird erreicht, daß die Dicke der Reibringe wesentlich vergrößert wird. Trotzdem beträgt bei den erfindungsgemäßen Wellenbremsscheiben die Masse der Reibringe nur etwa 0,45 - 0,55 der Masse von bisher üblichen Reibringen aus Fe-Legierungen.

Durch die Verwendung einer mit harten keramischen Partikeln verstärkten untereutektischen AlSi-Basislegierung wurde ein besonders verschleißbeständiger, abriebfester und leichter Werkstoff für die Bremsscheibe gefunden, der auch die erforderlichen Festigkeiten (Wärme-, Thermoschock- und Dauerschwingfestigkeit) besitzt. Als untereutektische Basislegierung hat sich insbesondere ein Gußwerkstoff mit Legierungsanteilen von 7 - 10 Gew% Si und 0,3 - 1,5 Gew% Mg bewährt.

In die erfindungsgemäße Basislegierung können in an sich bekannter Weise keramische Bestandteile auf karbidischer und/oder oxydischer Basis, vorzugsweise SiC und/oder Al₂O₃, eingelagert sein. Dabei hat es sich als günstig erwiesen, daß keramische Bestandteile aus Pulver und/oder Fasem ins flüssige Material angebracht und mit diesem vergossen werden. Das Gußgefüge kann auch Verstärkungselemente aus Porenkeramik enthalten. Die Basislegierungen aus AlSi oder AlSiMg können erfindungsgemäß bis zu 30 Gew% SiC enthalten.

Es hat sich gezeigt, daß bei Verwendung eines auf den erfindungsgemäßen Werkstoff für die Reibringe angepaßten Werkstoff für die Bremsbeläge sich an der Reibfläche zwischen Reibring und Bremsbelag trotz eines gewissen Abriebs immer wieder eine besonders widerstandsfähige Oberflächenschicht bildet. Zur Vermeidung einer ungünstigen gegenseitigen Beeinflussung der Materialien der Reibpartner Bremsring und Bremsbelag kann auch der Bremsbelag im wesentlichen aus demselben Material bestehen wie der Bremsring oder auch die gesamte Bremsscheibe.

Die Erfindung wird anhand der beigefügten Figuren 1 bis 4 beispielsweise näher erläutert.
- Fig. 1: zeigt im Querschnitt einen Teil einer aus Nabe und Reibring zusammengesetzten belüfteten Wellenbremsscheibe.
- Fig. 2: zeigt entsprechend Fig. 1 eine nicht belüftete Wellenbremsscheibe.
- Fig. 3: zeigt entsprechend eine belüftete Monoblockscheibe.
- Fig. 4: zeigt entsprechend eine nicht belüftete Monoblockscheibe.

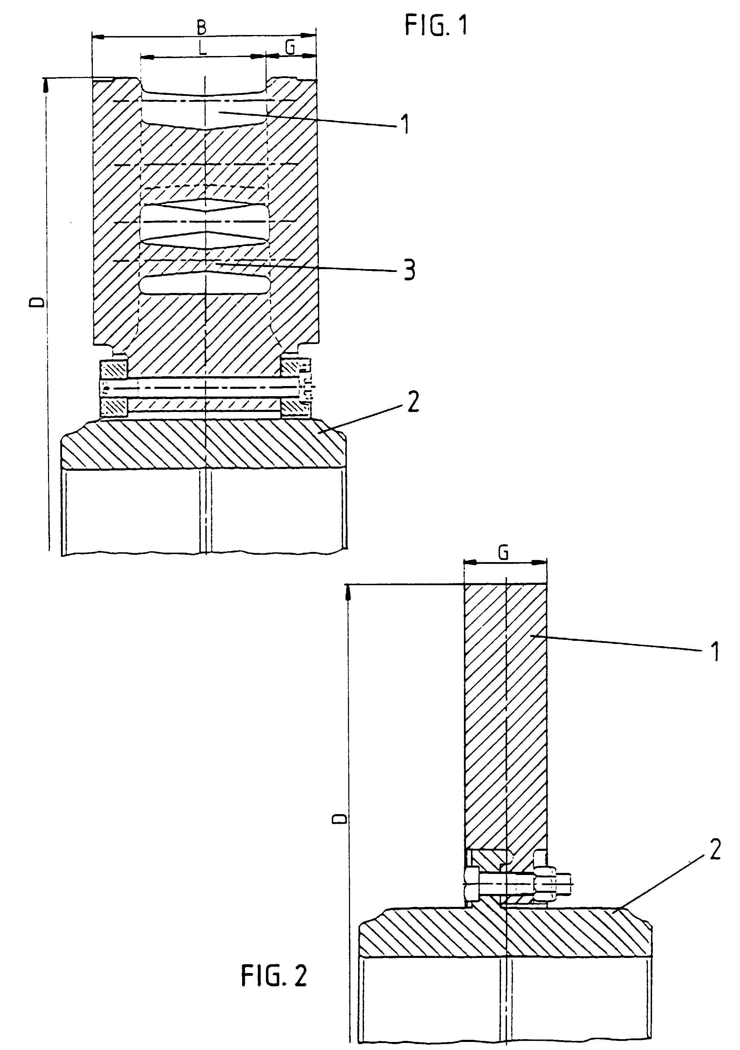

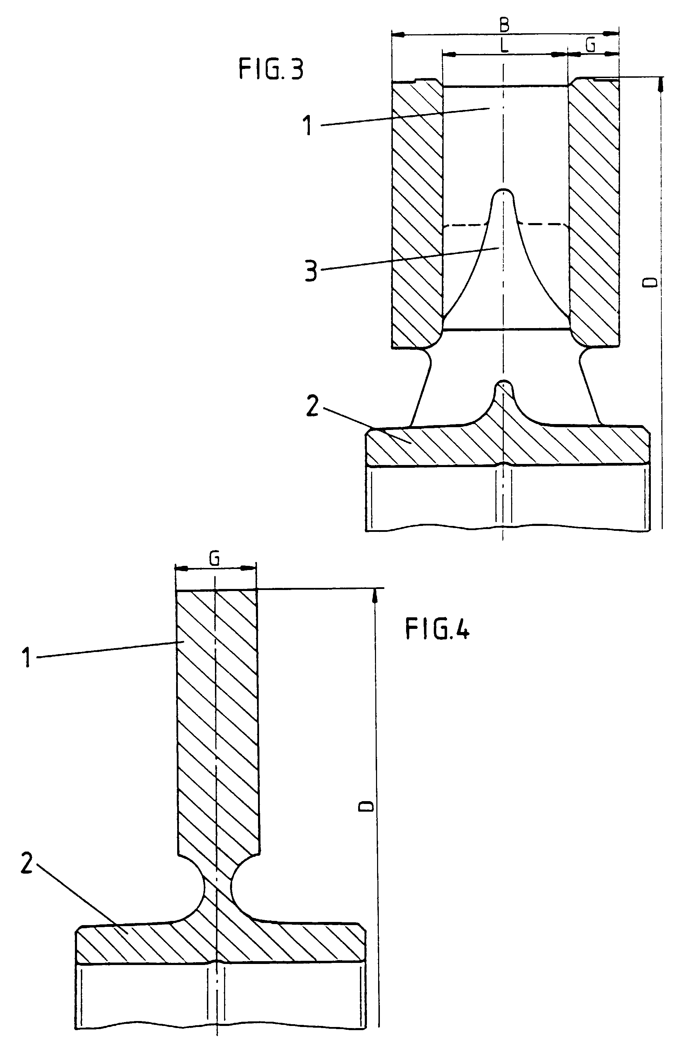

In den Figuren 1 bis 4 sind Wellenbremsscheiben dargestellt, von denen insbesondere bei Hochgeschwindigkeitszügen mehrere auf einer Achse angeordnet werden können. Nach den Figuren 1 und 2 sind Reibring 1 und Nabe 2 über geeignete Schraub- oder Steckverbindungen miteinander verbunden. In den Figuren 3 und 4 sind sogenannte Monoblockscheiben dargestellt, bei denen Reibring 1 und Nabe 2 aus einem Stück gegossen sind. Die Figuren 1 und 3 zeigen sogenannte innenbelüftete, mit zwei Bremsflächen ausgestattete Reibringe, wobei zwischen den Reibringen Kühlrippen 3 angeordnet sind. Gegenüber üblichen innenbelüfteten Wellenbremsscheiben aus Gußeisen weisen diese Bremsscheiben eine erheblich größere Gurtdicke G auf. Bei einer an sich bekannten Gesamtbreite B einer innenbelüfteten Bremsscheibe von 60 bis 200 mm, vorzugsweise 80 bis 130 mm, wird erfindungsgemäß eine Gurtdicke G der Reibringe von 20 bis 50 mm, vorzugsweise 30 bis 40 mm, vorgeschlagen. Es hat sich darüber hinaus als günstig erwiesen, wenn das Verhältnis von Lüftungskanalbreite L zur Gurtdicke G eines Reibringes 0,5 bis 2, vorzugsweise 0,8 bis 1,4, beträgt.

Bei einem nichtbelüfteten Reibring, wie er in den Figuren 2 und 4 dargestellt ist, mit einem an sich bekannten Außendurchmesser D von 300 bis 1000 mm soll erfindungsgemäß das Verhältnis von Durchmesser D zu Gurtdicke G im Bereich von 8 bis 12, vorzugsweise 10, liegen.

Zur Verbindung der Nabe 2 mit dem Reibring 1 nach den Figuren 1 und 2 hat es sich als günstig erwiesen, in der Verbindungsfläche zwischen Reibring 1 und Nabe 2 in die Aluminiumscheibe Eisenplatten einzugießen, so daß bei einer eventuellen radialen Verschiebung zwischen Reibring 1 und Nabe 2 aufgrund der Temperaturunterschiede die Gleitfläche zwischen diesen beiden aus einer widerstandsfähigeren Eisen-Eisen-Paarung besteht.

Der Erfindungsvorschlag gilt in gleicher Weise auch für nicht dargestellte Radbremsscheiben, wobei die Reibringe mit Segmenten am Rad befestigt sind.

## Patentansprüche

1. Bremsscheibe für Schienenfahrzeuge als Monoblockscheibe oder als aus Nabe (2), beziehungsweise Segmenten und Reibring (1) zusammengesetzte Scheibe bestehend aus einer mit harten keramischen Partikeln verstärkten untereutektischen AlSi-Basislegierung, **dadurch gekennzeichnet**, daß bei einer innenbelüfteten Bremsscheibe mit einer Gesamtbreite (B) der Bremsscheibe von 60 bis 200 mm, vorzugsweise 80 bis 130 mm, die Gurtdicke (G) der Reibringe je 20 bis 50 mm, vorzugsweise 30 bis 40 mm, beträgt.

2. Bremsscheibe nach Anspruch 1, **dadurch gekennzeichnet**, daß das Verhältnis von LüftungsKanalbreite (L) zur Gurtdicke (G) eines Reibringes 0,5 bis 2, vcrzugsweise 0,8 bis 1,4 beträgt.

3. Bremsscheibe für Schienenfahrzeuge als Monoblockscheibe oder als aus Nabe (2), bzw. Segmenten und Reibring (1) zusammengesetzte Scheibe bestehend aus einer mit harten keramischen Partikeln verstärkten untereutektischen AlSi-Basislegierung, **dadurch gekennzeichnet**, daß bei einem nicht belüfteten Reibring mit einem Durchmesser (D) von 300 bis 1000 mm das Verhältnis von Durchmesser (D) zu Gurtdicke (G) im Bereich von 8 bis 12, vorzugsweise von 10 liegt.

4. Bremsscheibe nach Anspruch 1, 2 oder 3, **dadurch gekennzeichnet**, daß die AlSi-Basislegierung 7-10 Gew% Si und 0,3-1,5 Gew% Mg enthält.

5. Bremsscheibe nach mindestens einem der vorhergehenden Ansprüche, **dadurch gekennzeichnet**, daß die keramischen Verstärkungen in Form eines Skeletts ausgebildet sind.

6. Bremsscheibe nach mindestens einem der vorhergehenden Ansprüche, **dadurch gekennzeichnet**, daß in das Gußgefüge Verstärkungselemente aus Porenkeramik integriert sind.

## Claims

1. Brake disk for rail vehicles designed as monobloc disk or as a disk formed by a hub (2) or segments and friction ring (1) consisting of a hypo-eutectic AlSi base alloy material reinforced by hard ceramic particles, **characterized in that** for an internally ventilated brake disk having a total width (B) of the brake disk of 60 to 200 mm, preferably 80 to 130 mm, the chord thickness (G) of the friction rings is 20 to 50 mm each, preferably 30 to 40 mm.

2. Brake disk according to Claim 1, **characterized in that** the relation between ventilation duct width (L) and chord width (G) of a friction ring is 0.5 to 2, preferably 0.8 to 1.4.

3. Brake disk for rail vehicles designed as monobloc disk or as a disk formed by a hub (2) or segments and friction ring (1) consisting of a hypo-eutectic AlSi base alloy material reinforced by hard ceramic particles, **characterized in that** for a non-ventilated friction ring of a diameter (D) between 300 and 1000 mm the diameter (D) to chord thickness (G) relation is in the range of 8 to 12, preferably 10.

4. Brake disk according to Claim 1, 2 or 3, **characterized in that** the AlSi base alloy contains 7-10 % by weight of Si and 0.3-1.5 % by weight of Mg.

5. Brake disk according to at least one of the above Claims, **characterized in that** the ceramic constituents are included in the form of a skeleton.

6. Brake disk according to at least one of the above Claims, **characterized in that** reinforcing elements of porous ceramic material have been integrated into the casting structure.

## Revendications

1. Disque de frein pour véhicules ferroviaires sous forme de disque monobloc ou de disque constitué par un moyeu (2) ou des segments et une bague de friction (1) composé d'un alliage de base AlSi hypoeutectique renforcé par des particules céramiques dures **caractérisé en ce que** dans le cas d'un disque de frein à ventilation intérieure d'une largeur totale (B) du disque de frein de l'ordre de 60 à 200 mm, de préférence entre 80 et 130 mm, l'épaisseur de la membrure (G) des bagues de friction est respectivement de l'ordre de 20 à 50 mm et de préférence entre 30 et 40 mm.

2. Disque de frein selon la revendication 1, **caractérisé en ce que** le rapport entre la largeur du canal de ventilation (L) et la largeur de la membrure (G) d'une bague de friction est de l'ordre de 0,5 à 2 et de préférence entre 0,8 et 1,4.

3. Disque de frein pour véhicules ferroviaires sous forme de disque monobloc ou de disque constitué par un moyeu (2) ou des segments et une bague de friction (1) composé d'un alliage de base AlSi hypoeutectique renforcé par des particules céramiques dures **caractérisé en ce que** dans le cas d'une bague de friction non ventilée d'un diamètre (D) de l'ordre de 300 à 1000 mm, le rapport entre le diamètre (D) et l'épaisseur de la membrure (G) est situé entre 8 et 12 et est de préférence 10.

4. Disque de frein selon la revendication 1, 2 ou 3 **caractérisé en ce que** l'alliage de base AlSi contient 7 à 10% en poids de Si et 0,3 à 1,5 % en poids de Mg.

5. Disque de frein selon au moins l'une des revendications précédentes **caractérisé en ce que** les éléments de renforcement céramiques se présentent sous la forme de squelette.

6. Disque de frein selon au moins l'une des revendications précédentes **caractérisé en ce que** les éléments de renforcement intégrés dans la structure brute de coulée sont en céramique poreuse.
